# EUROPÄISCHE PATENTANMELDUNG

(11) **EP 1 923 351 A1**
(43) Veröffentlichungstag der Anmeldung: **21.05.2008**
(21) Anmeldenummer: 07019367.7
(22) Anmeldetag: 02.10.2007
(51) Int. Cl.: C01B 3/36, C01B 3/38

(54) **Verfahren und Vorrichtung zur Erzeugung von Wasserstoff aus glycerinhaltingen Stoffen**

(30) Priorität: 31.10.2006 DE 102006051262; 30.01.2007 DE 102007004626; 16.05.2007 DE 102007022962
(71) Anmelder: Linde Aktiengesellschaft, 80807 München (DE)
(72) Erfinder: Behrens, Axel, Dr., 81377 München (DE); Bölt, Heinz, 82515 Wolfratshausen (DE); Fritz, Peter Matthias, Dr., 82008 Unterhaching (DE); Korn, Wibke, 82152 Krailling (DE)

(57) **Zusammenfassung**

Die Erfindung betrifft ein Verfahren zur Erzeugung zumindest eines Wasserstoff enthaltenden Produktstromes (6) aus einem Glycerin enthaltenden Einsatzstoff (1) sowie eine Vorrichtung zur Durchführung des Verfahrens. Aus dem Glycerin enthaltenden Einsatzstoff (1) wird durch Abtrennung unerwünschter Stoffe (3) und die Pyrolyse von Glycerin (2) ein Zwischenprodukt (4) gewonnen, welches anschließend durch Dampfreformierung in einem von außen beheizten Dampfreformierungsreaktor (Dampfreformer (D)) in ein Wasserstoff und Kohlenmonoxid enthaltendes Syntheserohgas (5) umgesetzt wird.

## Beschreibung

Die Erfindung betrifft ein Verfahren zur Erzeugung zumindest eines Wasserstoff enthaltenden Produktstromes aus einem Glycerin enthaltenden Einsatzstoff sowie eine Vorrichtung zur Durchführung des Verfahrens.

Im Bestreben, den Kohlendioxideintrag in die Erdatmosphäre zu senken oder zumindest nicht weiter anwachsen zu lassen, und als Alternativen zu den schwindenden Erdöl- und Erdgasreserven, werden in Zukunft verstärkt Energieträger aus nachwachsenden Rohstoffen erzeugt werden. Gemäß einer EU-Richtlinie sollen in der Europäischen Union bis zum Jahr 2010 mindestens 5,75% des Kraftstoffbedarfs durch derartige Energieträger gedeckt werden. Eine herausragende Rolle spielt hierbei Biodiesel, der bereits heute in einer Konzentration von bis zu fünf Prozent dem an deutschen Tankstellen verfügbaren Dieselkraftstoff zugesetzt ist.

Biodiesel ist ein genormter Krafftstoff, der vor allem aus Rapsöl, aber auch aus anderen pflanzlichen Ölen und -fetten gewonnen wird. Pflanzenöle und -fette bestehen aus Triglyceriden, d.h. Fettsäuren, die jeweils zu dritt an Glycerin gebunden sind. Dieser Aufbau hat zur Folge, dass Pflanzenöle und -fette bei normalen Umgebungstemperaturen zähflüssig bis fest sind, also eine viel höhere Viskosität besitzen als die Kraftstoffe, für die ein marktüblicher Dieselmotor ausgelegt ist. Pflanzenöle und -fette verhalten sich beim Einspritzvorgang anders, und auch die Verbrennung läuft weniger sauber ab. Diese Nachteile lassen sich auch durch motorische Eingriffe - wie beispielsweise der Vorwärmung des Pflanzenöls - nur unvollkommen kompensieren.

Biodiesel entsteht aus Pflanzenölen und -fetten durch den Ersatz des Glycerins durch Methanol. Seine Viskosität entspricht der von handelsüblichem Dieselkraftstoff, weshalb er problemlos auch in nicht modifizierten Dieselmotoren verbrannt werden kann.

Das aus den Pflanzenölen und -fetten bei der Biodieselproduktion abgetrennte Glycerin wird nicht in reiner Form gewonnen, sondern fällt als Teil von Stoffgemischen an, die neben Glycerin größere Mengen an Verunreinigungen enthalten. Ein derartiges Stoffgemisch ist beispielsweise sog. Rohglycerin, das einen Glyceringehalt von 80-85% aufweist, daneben aber auch noch in größeren Mengen Wasser und Salze sowie Reststoffe aus dem Produktionsprozess enthält. Nach dem Stand der Technik wird das Rohglycerin in aufwendigen Verfahrensschritten durch Vakuumdestillation, Desodorierung und Filtration soweit aufgereinigt, dass es den strengen Anforderungen des Europäischen Arzneimittelbuches (European Pharmacopeion) genügt, und mit einer Reinheit von mindestens 99,5% als Pharmaglycerin an die Pharmazeutische Industrie verkauft werden kann. Gegenwärtig kann die gesamte bei der Biodieselherstellung anfallende Glycerinmenge auf diese Weise verwertet werden. Mit der absehbaren Ausweitung der Biodieselproduktion, wird dies in Zukunft jedoch immer schwieriger, so dass nach anderen Verwertungswegen für das Rohglycerin gesucht werden muss.

Aufgabe der vorliegenden Erfindung ist es daher, ein Verfahren der gattungsgemäßen Art anzugeben, dass es ermöglicht, bei der Biodieselherstellung anfallendes Glycerin enthaltende Nebenprodukte einer wirtschaftlichen Verwertung zuzuführen.

Diese Aufgabe wird verfahrensseitig erfindungsgemäß dadurch gelöst, dass aus dem Glycerin enthaltenden Einsatzstoff durch Abtrennung unerwünschter Stoffe und die Pyrolyse von Glycerin ein Zwischenprodukt gewonnen wird, welches anschließend durch Dampfreformierung in einem von außen beheizten Dampfreformierungsreaktor (Dampfreformer) in ein Wasserstoff und Kohlenmonoxid enthaltendes Syntheserohgas umgesetzt wird.

Eine bevorzugte Variante des erfindungsgemäßen Verfahrens sieht vor, dass das durch Dampfreformierung erzeugte Syntheserohgas einer Wassergas-Shift unterzogen wird, bei der vorzugsweise das gesamte im Syntheserohgas enthaltene Kohlenmonoxid mit Wasser zu Wasserstoff und Kohlendioxid umgesetzt wird.

Der Energieverbrauch des erfindungsgemäßen Verfahrens wird maßgeblich von der im Dampfreformer zu erwärmenden Wassermenge beeinflusst: je größer diese Wassermenge, desto höher der Energiebedarf. Um den Energiebedarf des erfindungsgemäßen Verfahrens zu optimieren, weist der dem Dampfreformer zugeführte Einsatz daher sinnvoller Weise nur einen Mindestwassergehalt auf, dessen Größe durch die nachfolgenden Verfahrensschritte bestimmt wird. Der Mindestwassergehalt ergibt sich aus der Forderung, dass die Rußbildung im Dampfreformer vollständig unterdrückt wird und gleichzeitig genügend Wasser im Syntheserohgas verbleibt, um evtl. an die Dampfreformierung anschließende, Wasser verbrauchenden Verfahrensschritte (z.B. eine Wassergas-Shift) ohne weitere Zuführung von Wasser durchführen zu können. Zweckmäßiger Weise wird daher der Wasser- bzw. der Wasserdampfgehalt des Zwischenproduktes durch Hinzufügen oder Entfernen von Wasser- bzw. Wasserdampf vor der Dampfreformierung auf den Mindestwassergehalt eingestellt.

Der Erfindung liegt die Erfahrung zugrunde, dass bei einer direkten Verwertung von Glycerin enthaltenden Einsatzstoffen, wie beispielsweise Rohglycerin, durch Vergasung und/oder Dampfreformierung aufgrund des hohen Anteils der in den Einsatzstoffen vorhandenen Verunreinigungen Probleme auftreten, die nicht oder nur mit großem Aufwand überwunden werden können. So führen Salze zur Korrosion von Anlagenteilen und zur vorzeitigen Deaktivierung von Katalysatoren. Auch organische Verunreinigungen sind nur schwer zu beherrschen, und können zu Ablagerungen und der Bildung von Ruß führen.

Eine Ausgestaltung des erfindungsgemäßen Verfahrens sieht vor, dass die Abtrennung unerwünschter Stoffe - bereits im Einsatzstoff vorhandener und/oder bei der Durchführung des erfindungsgemäßen Verfahrens erzeugter - und die Pyrolyse von Glycerin gleichzeitig in einem Verfahrensschritt durchgeführt werden.

Eine andere Ausgestaltung des erfindungsgemäßen Verfahrens sieht vor, dass aus dem Einsatzstoff in zumindest zwei aufeinander folgenden Verfahrensschritten ein Zwischenprodukt gewonnen wird, wobei in jedem der Verfahrenschritte unerwünschte Stoffe abgetrennt werden oder/und Glycerin durch Pyrolyse umgesetzt wird. Handelt es sich bei dem zweiten Verfahrensschritt um eine reine Pyrolyse (ohne die Abtrennung unerwünschter Stoffe), so sieht eine bevorzugte Variante des erfindungsgemäßen Verfahrens vor, dass die Pyrolyse in der sog. Konvektionszone des Dampfreformers durchgeführt wird, die zu diesem Zweck als Pyrolysereaktor ausgebildet ist.

Um im Einsatzstoff vorliegende unerwünschte Stoffe abzutrennen, wird der Einsatzstoff erfindungsgemäß bevorzugt einer Destillation oder/und einer thermische Trocknung oder/und einer Filterung über Aktivkohle oder/und Membran oder/und einer Chromatographie oder/und einem lonenaustausch oder/und einem lonenausschluss unterzogen.

Zweckmäßiger Weise wird der Wasser- bzw. der Wasserdampfgehalt in der durch Abtrennung unerwünschter Stoffe aus dem Einsatzstoff gewonnenen Glycerin enthaltenden Fraktion durch Hinzufügen oder Entfernen von Wasser- bzw. Wasserdampf auf einen Wert eingestellt, der die Durchführung einer nachfolgenden Pyrolyse ohne Rußbildung und bei gleichzeitig minimalem Energieeinsatz ermöglicht. Eine andere Ausgestaltung des erfindungsgemäßen Verfahrens sieht vor, das für die Pyrolyse benötigte Wasser in mehr als einem Schritt (gestuft) zuzuführen, wobei das Wasser vor und/oder während der Pyrolyse an geeigneter Stelle zugeführt wird. Wird die Pyrolyse in mehreren aufeinander folgenden Schritten (Pyrolyseschritten) durchgeführt, so erfolgt die Wasserzuführung sinnvoller Weise jeweils vor einem Pyrolyseschritt.

Wird die Glycerin enthaltende Fraktion der Pyrolyse in flüssiger Form zugeführt, so wird Wasser vorzugsweise in Form von Wasserdampf zugeführt, wobei der Wasserdampf in die Glycerin enthaltende Fraktion oder die Glycerin enthaltende Fraktion in den Wasserdampf eingedüst wird. Mit dem Wasserdampf wird bereits ein erheblicher Teil der für die nachfolgende Pyrolyse benötigten Energie eingebracht, was zu einem verminderten Heizaufwand im Pyrolysereaktor und zu einer Reduzierung des apparativen Aufwandes für den Pyrolysereaktor führt.

Unter thermischer Trocknung ist hierbei zu verstehen, dass der Einsatzstoff in eine thermische Trocknungseinrichtung eingeleitet und dort einer thermischen Behandlung unterzogen wird. Flüchtige Bestandteile, wie Wasser und Glycerin, werden verdampft und bilden, u.U. mit anderen gasförmigen Stoffen, eine Gasfraktion, während Feststoffe, wie etwa Salze, in eine weitgehend wasserfreie Feststofffraktion überführt werden. Feststoff- und Gasfraktion werden anschließend weitgehend getrennt aus der thermischen Trocknungseinrichtung abgezogen, die hierzu mit einer geeigneten Einrichtung zur Trennung von Staub und Gas, wie beispielsweise einem Schwerkraftabscheider oder/und einem Zyklon oder/und einer Filtriereinrichtung oder/und einer Wasserwäsche, ausgestattet ist.

Bei hinreichend hohen Temperaturen wird Glycerin thermisch zersetzt, d.h. pyrolysiert. Das erfindungsgemäße Verfahren weiterbildend wird daher vorgeschlagen, dass die thermische Trocknung des Einsatzstoffes bei Temperaturen durchgeführt wird, bei denen zumindest eine teilweise Umsetzung des im Einsatzstoff enthaltenen Glycerins durch Pyrolyse erfolgt. Je nach dem, wie viel des Glycerins bei der thermischen Trocknung pyrolysiert wird, wird die Gasfraktion im Anschluss an die thermische Trocknung einer weiteren Pyrolyse unterzogen oder direkt der Dampfreformierung zugeführt.

Eine vorteilhafte Ausgestaltung des erfindungsgemäßen Verfahrens sieht vor, dass die zur thermischen Trocknung des Einsatzstoffes benötigte Wärme einem heißen Gasstrom entzogen wird, dessen Temperatur zwischen 100 und 1.000°C, bevorzugt zwischen 100 und 250°C liegt, und bei dem es sich vorzugsweise um einen unmittelbar hinter der Dampfreformierung abgezweigten Synthesegasgasstrom handelt. Wird die Wärme im indirekten Wärmetausch von einem Syntheserohgasstrom auf den Einsatzstoff übertragen, so wird der abgekühlte Syntheserohgasstrom vorteilhaft wieder hinter die Dampfreformierung zurückgeführt und in den Syntheserohgasstrom eingespeist.

Vorzugsweise werden zur thermischen Trocknung des Einsatzstoffes Fließbettgranulatoren oder/und Fließbetttrockner oder/und Trommeltrockner oder/und Wirbelschichttrockner oder/und Suspensionstrockner oder/und Pastentrockner eingesetzt.

Varianten des erfindungsgemäßen Verfahrens sehen vor, dass die Pyrolyse unter Zuführung von Wasser oder/und Dampf oder/und einem Oxidationsmittel durchgeführt wird, wobei es sich bei dem Oxidationsmittel um Luft oder um mit Sauerstoff angereicherte Luft oder um Sauerstoff handelt.

Weitere Varianten des erfindungsgemäßen Verfahrens sehen vor, dass das durch Abtrennung unerwünschter Stoffe und Pyrolyse aus dem Einsatzstoff gewonnene Zwischenprodukt gemeinsam mit einem geeigneten Oxidationsmittel, bei dem es sich um Luft oder um mit Sauerstoff angereicherte Luft oder um Sauerstoff handelt, einer, vorzugsweise katalytisch unterstützten, Dampfreformierung zugeführt wird.

Abhängig von dem Verfahren, das zur Abtrennung unerwünschter Stoffe aus dem Einsatzstoff gewählt wird, kann bei der Durchführung des erfindungsgemäßen Verfahrens ein wasserhaltiges Gemisch (Abwasser) anfallen, in dem die abgetrennten Stoffe in gelöster oder/und suspendierter Form vorliegen, und das ohne weitere Behandlung nicht stofflich genutzt werden kann. Das Abwasser stellt einen Abfallstoff dar, der als Sondermüll,einer Deponierung zugeführt werden muss. Um die Deponiekosten gering zu halten, wird angestrebt, das zu deponierende Abfallvolumen so klein wie möglich zu halten. Eine Ausgestaltung des erfindungsgemäßen Verfahrens sieht daher vor, dass das Abwasser einer Behandlung unterzogen wird, bei der das zu deponierende Abfallvolumen reduziert wird. Bevorzugt wird das Abwasser in einer thermischen Trocknungseinrichtung einer Trocknung unterzogen, wobei eine weitgehend wasserfreie Feststofffraktion und eine Gasfraktion erzeugt werden. Im günstigsten Fall kann die so gewonnene Feststofffraktion wirtschaftlich (z. B. als Düngemittel) verwertet werden, sodass das zu deponierende Abfallvolumen auf Null sinkt.

Eine vorteilhafte Ausgestaltung des erfindungsgemäßen Verfahrens sieht vor, dass die zur thermischen Trocknung von Abwasser benötigte Wärme einem heißen Gasstrom entzogen wird, dessen Temperatur zwischen 100 und 1.000°C, bevorzugt zwischen 100 und 250°C liegt, und bei dem es sich vorzugsweise um einen unmittelbar hinter der Dampfreformierung abgezweigten Syntheserohgasstrom handelt. Aufgrund der Wärme, die von dem heißen Gasstrom an das Abwasser abgegeben wird, gehen flüchtige Bestandteile aus dem Abwasser in die Gasphase über, wodurch eine Gasfraktion und eine weitgehend wasserfreie Feststofffraktion, die je nach dem eingesetzten Trocknungsverfahren beispielsweise als Granulat oder Pulver vorliegt, erzeugt werden.

Handelt es sich bei dem heißen, zur thermischen Trocknung von Abwasser eingesetzten Gasstrom um einen heißen Syntheserohgasstrom und wird die Wärme im direkten Wärmetausch auf das zu trocknende Abwasser übertragen, so sieht eine Weiterbildung des erfindungsgemäßen Verfahrens vor, dass die bei der Trocknung erzeugte Gasfraktion vorzugsweise in einer Wasserwascheinrichtung einer Wasserwäsche unterzogen, anschließend vor den Dampfreformer zurückgeführt und diesem als Einsatz zuführt wird. Zweckmäßiger Weise wird das beladene Waschwasser aus der Wasserwascheinrichtung abgezogen und dem Glycerin enthaltenden Einsatzstoff zugemischt.

Vorzugsweise werden zur thermischen Trocknung von Abwasser Fließbettgranulatoren oder/und Fließbetttrockner oder/und Trommeltrockner oder/und Wirbelschichttrockner oder/und Suspensionstrockner oder/und Pastentrockner eingesetzt.

Die Erfindung betrifft ferner eine Vorrichtung zur Durchführung des erfindungsgemäßen Verfahrens.

Vorrichtungsseitig wird die gestellte Aufgabe dadurch gelöst, dass eine Pyrolyseeinrichtung, in der aus dem Einsatzstoff durch Abtrennung von Verunreinigungen und Pyrolyse des im Einsatzstoff enthaltenen Glycerins ein Zwischenprodukt erzeugbar ist, und ein von außen beheizter Dampfreformierungsreaktor (Dampfreformer), in welchem aus dem in der Pyrolyseeinrichtung erzeugten Zwischenprodukt ein Wasserstoff und Kohlenmonoxid enthaltendes Syntheserohgas herstellbar ist, hintereinander angeordnet sind.

Eine bevorzugte Ausführung der erfindungsgemäßen Vorrichtung sieht vor, dass die Pyrolyseeinrichtung aus einer thermischen Trocknungseinrichtung besteht, in der aus dem Einsatzstoff eine Gas- und eine weitgehend wasserfreie Feststofffraktion erzeugbar sind, wobei aufgrund der in der thermischen Trocknungseinrichtung herrschenden Temperaturen in der Gasfraktion vorliegendes Glycerin zumindest teilweise pyrolysiert wird. Zweckmäßiger Weise umfasst die thermische Trocknungseinrichtung eine geeignete Einrichtung zur Abtrennung von Staub aus der Gasfraktion, sodass ein weitgehend staubfreies Zwischenprodukt erzeugbar und dem Dampfreformer zuführbar ist. Vorzugsweise handelt es sich bei der thermische Trocknungseinrichtung um einen Fließbettgranulator oder/und einen Fließbetttrockner oder/und einen Trommeltrockner oder/und einen Wirbelschichttrockner oder/und einen Suspensionstrockner oder/und einen Pastentrockner. Derartige thermische Trocknungseinrichtungen sind dem Fachmann seit Jahren bekannt und auf dem Markt verfügbar.

Eine andere bevorzugte Ausführung der erfindungsgemäßen Vorrichtung sieht vor, dass die Pyrolyseeinrichtung eine Reinigungseinrichtung und einen nachgeschalteten Pyrolysereaktor umfasst, wobei in der Reinigungsseinrichtung aus dem Einsatzstoff durch Abtrennung von Verunreinigungen ein Pyrolyseeinsatz erzeugbar ist, welcher im Pyrolysereaktor durch Pyrolyse in eine Zwischenprodukt umsetzbar ist. Erfindungsgemäß ist die Reinigungseinrichtung bevorzugt als Vakuumdestillationseinrichtung oder/und thermische Trocknungseinrichtung oder/und Filtereinrichtung mit Aktivkohle oder Membran oder/und Chromatographieeinrichtung oder/und lonenaustauscher oder/und lonenausschlusseinrichtung ausgeführt.

Eine zweckmäßige Ausgestaltung der erfindungsgemäßen Vorrichtung sieht eine geeignete Einrichtung vor, mit welcher der Wasser- bzw. der Wasserdampfgehalt der durch Abtrennung unerwünschter Stoffe aus dem Einsatzstoff gewonnenen Glycerin enthaltenden Fraktion durch Hinzufügen oder Entfernen von Wasser bzw. Wasserdampf vorzugsweise auf einen für die Durchführung einer nachfolgenden Pyrolyse günstigen Wert einstellbar ist. Eine andere Ausgestaltung der erfindungsgemäßen Vorrichtung sieht eine geeignete Einrichtung vor, mit der das für die Pyrolyse benötigte Wasser in mehr als einem Schritten (gestuft) vor dem Pyrolysereaktor und/oder in den Pyrolysereaktor an geeigneten Stelle zuführbar ist. Wird die Pyrolyse in mehreren in Serie angeordneten Pyrolysereaktoren durchgeführt, so ist sinnvoller Weise Wasser jeweils vor einem Pyrolysereaktor zuführbar.

Wird die Glycerin enthaltende Fraktion der Pyrolyse in flüssiger Form zugeführt, so umfasst die erfindungsgemäße Vorrichtung vorzugsweise ein Einrichtung zur Vermischung von Wasserdampf mit der Glycerin enthaltende Fraktion (Mischer), wobei Wasserdampf in die Glycerin enthaltende Fraktion oder die Glycerin enthaltende Fraktion in den Wasserdampf eindüsbar ist. In dem Bestreben, den Mischer möglichst kompakt zu gestalten, ist beispielsweise an geeigneter Stelle eine Düse vorgesehen, über die die Glycerin enthaltende Fraktion als feiner Nebel in den stark turbulent strömenden Wasserdampf eingesprüht wird. Mit dem Wasserdampf wird bereits ein erheblicher Teil der für die nachfolgende Pyrolyse benötigten Energie eingebracht, was zu einem verminderten Heizaufwand im Pyrolysereaktor und zu einer Reduzierung des apparativen Aufwandes für den Pyrolysereaktor führt.

Bei dem Dampfreformer handelt es sich vorzugsweise um einen, dem Fachmann seit vielen Jahren bekannten Rohrreaktor, wie er auch für die Dampfreformierung von Methan eingesetzt wird. Die Einsatzstoffe werden in Rohren durch den Dampfreformer geführt, wo sie in der sog. Konvektioriszone zunächst vorgewärmt werden, bevor sie in der sich anschließenden sog. Strahlungszone, mit katalytischer Unterstützung, umgesetzt werden. Bevorzugte Ausgestaltungen der erfindungsgemäßen Vorrichtung sehen vor, dass Dampfreformer ein Katalysatormaterial aufweist, das aus Nickel (Ni) oder Platin (Pt) oder Palladium (Pd) oder Eisen (Fe) oder Rhodium (Rh) oder Ruthenium (Ru) oder Iridium (Ir) bestehen oder Ni und/oder Pt und/oder Pd und/oder Fe und/oder Rh und/oder Ru und/oder Ir enthält. Besonders bevorzugt handelt es sich bei dem Katalysatormaterial um ein Katalysatormaterial, das auch zur katalytisch unterstützten Dampfreformierung von Naphtha oder Methan geeignet ist.

Die erfindungsgemäße Vorrichtung weiterbildend, wird vorgeschlagen, dass Pyrolysereaktor und Dampfreformer eine bauliche Einheit bilden. Zweckmäßiger Weise ist die Konvektionszone des Dampfreformers als Pyrolysereaktor ausgebildet.

Eine vorteilhafte Variante der erfindungsgemäßen Vorrichtung sieht eine Einrichtung zur Reduzierung des Wassergehaltes eines bei der Reinigung des Glycerin enthaltenden Einsatzstoffes anfallenden, nicht weiter stofflich nutzbaren wasserhaltigen Gemisches (Abwasser) vor. Vorzugsweise handelt es sich bei dieser Einrichtung um eine thermische Trocknungseinrichtung, wie beispielsweise einen Fließbettgranulator oder/und einen Fließbetttrockner oder/und einen Trommeltrockner oder/und einen Wirbelschichttrockner oder/und einen Suspensionstrockner oder/und einen Pastentrockner. Derartige thermische Trocknungseinrichtungen sind dem Fachmann seit Jahren bekannt und auf dem Markt verfügbar. Zweckmäßiger Weise ist die thermische Trocknungseinrichtung so ausgestaltet, dass aus dem Abwasser eine weitgehend wasserfreie Feststoff- und eine weitgehend staubfreie Gasfraktion erzeugbar sind.

Handelt es sich bei der thermischen Trocknungseinrichtung um eine Einrichtung, in welcher dem zu trocknenden Abwasser in direktem Kontakt mit heißem Syntheserohgas Energie zuführbar ist, so sieht eine vorteilhafte Ausgestaltung der erfindungsgemäßen Vorrichtung eine Wasserwascheinrichtung vor, in welche der aus der thermischen Trocknungseinrichtung austretende, mit Staub beladene Gasstrom einleitbar und dort durch Wasserwäsche von Staub befreibar ist, bevor er zurückgeführt und dem Dampfreformer als Einsatz zugeführt wird. Zweckmäßiger Weise ist das beladene Waschwasser aus der Wasserwäsche abzieh- und dem Rohglyzerin zumischbar.

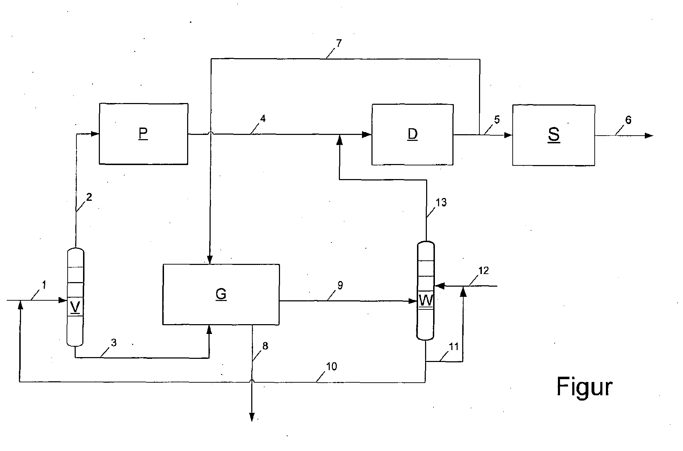

Im Folgenden soll die Erfindung anhand eines in der Figur schematisch dargestellten Ausführungsbeispiels näher erläutert werden:
Das vorliegende Ausführungsbeispiel betrifft eine Anlage zur Erzeugung eines vorwiegend Wasserstoff enthaltenden Produktgases, wobei Rohglycerin aus der Biodieselherstellung als Einsatz dient, dass zu ca. 85% aus Glycerin besteht, daneben aber auch noch in größeren Mengen Wasser und Salze sowie Reststoffe aus dem Produktionsprozess enthält.

Über Leitung 1 wird das Rohglycerin in die Vakuumdestillationseinrichtung V eingeleitet, wo es in die beiden Stoffströme 2 und 3 getrennt wird. Anschließend wird der Stoffstrom 2, der nahezu ausschließlich aus Glycerin besteht, dem Pyrolysereaktor P als Einsatz zugeleitet und dort zu einem Pyrolyseprodukt umgewandelt. Das Pyrolyseprodukt wird über Leitung 4 aus dem Pyrolysereaktor P abgezogen und in den Dampfreformer D weiter geleitet, wo es mit katalytischer Unterstützung in ein überwiegend Wasserstoff und Kohlenmonoxid enthaltendes Syntheserohgas umgesetzt wird. Über Leitung 5 wird das überwiegend Wasserstoff und Kohlenmonoxid enthaltende Syntheserohgas aus dem Dampfreformer D abgezogen und dem Shift-Reaktor S zugeführt. Aus dem Shift-Reaktor S, in welchem der überwiegende Teil des Kohlenmonoxids mit Wasser zu Kohlendioxid und Wasserstoff umgesetzt wird, wird ein vorwiegend Wasserstoff enthaltendes Produktgases über Leitung 6 abgezogen und einer Aufbereitung (nicht dargestellt) zugeleitet. Der Stoffstrom 3 aus der Vakuumdestillationseinrichtung V, der vorwiegend aus Wasser und Salzen sowie Reststoffen aus der Biodieselherstellung besteht, wird dem Granulator G zugeleitet und dort mittels des heißen Syntheserohgasstroms 7, der hinter dem Dampfreformer D abgezweigt wird, getrocknet. Die im Stoffstrom 3 enthaltenen Salze und andere Feststoffe werden in ein Granulat überführt und über Leitung 8 aus dem Granulator G abgezogen. Über Leitung 9 wird ein Stoffstrom, der überwiegend aus Gasen und Dämpfen besteht, daneben aber auch Feststoffe in Staubform enthält, der Wasserwascheinrichtung W zugeführt und dort gereinigt. Ein Teil des beladenen Waschwassers aus der Wasserwascheinrichtung W wird über Leitung 10 abgezogen und gemeinsam mit dem Rohglyzerin über Leitung 1 in die Vakuumdestillationseinrichtung V eingeleitet, während der andere Teil 11 mit Frischwasser 12 gemischt und als Waschwasser in die Wasserwascheinrichtung W zurück geführt wird. Über Leitung 13 wird ein weitgehend aus Syntheserohgas und Wasserdampf bestehender Stoffstrom aus der Wasserwascheinrichtung W abgezogen und gemeinsam mit dem Pyrolyseprodukt 4 dem Dampfreformer D zugeführt.

## Patentansprüche

1. Verfahren zur Erzeugung zumindest eines Wasserstoff enthaltenden Produktstromes aus einem Glycerin enthaltenden Einsatzstoff, **dadurch gekennzeichnet, dass** aus dem Glycerin enthaltenden Einsatzstoff durch Abtrennung unerwünschter Stoffe und die Pyrolyse von Glycerin ein Zwischenprodukt gewonnen wird, welches anschließend durch Dampfreformierung in einem von außen beheizten Dampfreformierungsreaktor (Dampfreformer) in ein Wasserstoff und Kohlenmonoxid enthaltendes Syntheserohgas umgesetzt wird.

2. Verfahren nach Anspruch 1, **dadurch gekennzeichnet, dass** die Abtrennung unerwünschter Stoffe - bereits im Einsatzstoff vorhandener und/oder bei der Durchführung des erfindungsgemäßen Verfahrens erzeugter - und die Pyrolyse von Glycerin gleichzeitig in einem Verfahrensschritt durchgeführt werden.

3. Verfahren nach Anspruch 1, **dadurch gekennzeichnet, dass** aus dem Einsatzstoff in zumindest zwei aufeinander folgenden Verfahrensschritten ein Zwischenprodukt gewonnen wird, wobei in jedem der Verfahrenschritte unerwünschte Stoffe abgetrennt werden oder/und Glycerin durch Pyrolyse umgesetzt wird.

4. Verfahren nach Anspruch 3, **dadurch gekennzeichnet, dass** die Pyrolyse in der sog. Konvektionszone des Dampfreformers durchgeführt wird.

5. Verfahren nach einem der Ansprüche 1 bis 4 **dadurch gekennzeichnet, dass** die Pyrolyse unter Zuführung von Wasser oder/und Dampf oder/und einem Oxidationsmittel durchgeführt wird, wobei es sich bei dem Oxidationsmittel um Luft oder um mit Sauerstoff angereicherte Luft oder um Sauerstoff handelt.

6. Verfahren nach einem der Ansprüche 1 bis 5 **dadurch gekennzeichnet, dass** im Einsatzstoff vorliegende unerwünschte Stoffe durch Destillation oder/und thermische Trocknung oder/und Filterung über Aktivkohle oder/und Membran oder/und Chromatographie oder/und einem lonenaustausch oder/und lonenausschluss abgetrennt werden.

7. Verfahren nach Anspruch 6 **dadurch gekennzeichnet, dass** die thermische Trocknung des Einsatzstoffes bei Temperaturen durchgeführt wird, bei denen zumindest eine teilweise Umsetzung des im Einsatzstoff enthaltenen Glycerins durch Pyrolyse erfolgt.

8. Verfahren nach einem der Ansprüche 1 bis 7, **dadurch gekennzeichnet, dass** ein bei der Abtrennung unerwünschter Stoff aus dem Einsatzstoff anfallendes wasserhaltiges Gemisch, in dem die abgetrennten Stoffe in gelöster oder/und suspendierter Form vorliegen, in einer thermischen Trocknungseinrichtung einer Trocknung unterzogen wird, wobei eine weitgehend wasserfreie Feststofffraktion und eine Gasfraktion erzeugt werden.

9. Vorrichtung zur Erzeugung zumindest eines Wasserstoff enthaltenden Produktstromes aus einem Glycerin enthaltenden Einsatzstoff, **dadurch gekennzeichnet, dass** eine Pyrolyseeinrichtung, in der aus dem Einsatzstoff durch Abtrennung von Verunreinigungen und Pyrolyse des im Einsatzstoff enthaltenen Glycerins ein Zwischenprodukt erzeugbar ist, und ein von außen beheizter Dampfreformierungsreaktor (Dampfreformer), in welchem aus dem in der Pyrolyseeinrichtung erzeugten Zwischenprodukt ein Wasserstoff und Kohlenmonoxid enthaltendes Syntheserohgas herstellbar ist, hintereinander angeordnet sind.

10. Vorrichtung nach Anspruch 9, **dadurch gekennzeichnet, dass** die Pyrolyseeinrichtung aus einer thermischen Trocknungseinrichtung besteht, in der aus dem Einsatzstoff eine Gas- und eine weitgehend wasserfreie Feststofffraktion erzeugbar sind, wobei aufgrund der in der thermischen Trocknungseinrichtung herrschenden Temperaturen in der Gasfraktion vorliegendes Glycerin zumindest teilweise pyrolysiert wird.

11. Vorrichtung nach Anspruch 9, **dadurch gekennzeichnet, dass** die Pyrolyseeinrichtung eine Reinigungseinrichtung und einen nachgeschalteten. Pyrolysereaktor umfasst, wobei in der Reinigungsseinrichtung aus dem Einsatzstoff durch Abtrennung von Verunreinigungen ein Pyrolyseeinsatz erzeugbar ist, welcher im Pyrolysereaktor durch Pyrolyse in eine Zwischenprodukt umsetzbar ist.

12. Vorrichtung nach Anspruch 11, **dadurch gekennzeichnet, dass** Pyrolysereaktor und Dampfreformer eine bauliche Einheit bilden, wozu zweckmäßiger Weise die Konvektionszone des Dampfreformers als Pyrolysereaktor ausgebildet ist.

13. Vorrichtung nach einem der Ansprüche 8 bis 12, **dadurch gekennzeichnet, dass** es sich bei der Reinigungseinrichtung um eine Vakuumdestillationseinrichtung oder/und eine thermische Trocknungseinrichtung oder/und eine Filtereinrichtung mit Aktivkohle oder Membran oder/und eine Chromatographieeinrichtung oder/und einen lonenaustauscher oder/und lonenausschlusseinrichtung handelt.

14. Vorrichtung nach einem der Ansprüche 8 bis 13, **dadurch gekennzeichnet, dass** Dampfreformer ein Katalysatormaterial aufweist, das aus Nickel (Ni) oder Platin (Pt) oder Palladium (Pd) oder Eisen (Fe) oder Rhodium (Rh) oder Ruthenium (Ru) oder Iridium (Ir) bestehen oder Ni und/oder Pt und/oder Pd und/oder Fe und/oder Rh und/oder Ru und/oder lr enthält.

15. Vorrichtung nach Anspruch 14, **dadurch gekennzeichnet, dass** es sich bei dem Dampfreformer um einen Rohrreaktor mit Konvektions- und Strahlungszone handelt.

16. Vorrichtung nach einem der Ansprüche 8 bis 15, **dadurch gekennzeichnet, dass** sie eine Einrichtung zur Reduzierung des Wassergehaltes eines bei der Reinigung des Glycerins enthaltenden Einsatzstoffes anfallenden, nicht weiter stofflich nutzbaren wasserhaltigen Gemisches (Abwasser) aufweist.
